# EUROPEAN PATENT SPECIFICATION

(11) **EP 0 246 450 B1**
(45) Date of publication and mention of the grant of the patent: **15.06.1994**
(21) Application number: 87105639.6
(22) Date of filing: 16.04.1987
(51) Int. Cl.: B65D 51/00

(54) **Automotive radiator cap**
Automobilkühlerdeckel
Bouchon de radiateur automoteur

(30) Priority: 18.04.1986 JP 90994/86; 21.07.1986 JP 171294/86; 21.07.1986 JP 171295/86; 08.10.1986 JP 239976/86
(43) Date of publication of application: 25.11.1987
(60) Divisional application: 93118218.2
(73) Proprietor: NIPPONDENSO CO., LTD., Kariya-shi Aichi-ken (JP)
(72) Inventor: Susa, Sumio, Anjo-shi aichi (JP); Nagara, Toshio, Toyoda-shi Aichi (JP); Fukuda, Sunao, Oobu-shi Aichi (JP); Kato, Seiichi, Toyoake-shi Aichi (JP); Muto, Satomi/1-33, Nishinowari-cho, Nagoya-shi Aichi (JP)
(74) Representative: Klingseisen, Franz, Dipl.-Ing.

(56) References cited:
- EP-A- 0 233 654
- US-A- 3 910 451
- US-A- 4 489 883
- US-A- 4 498 599

## Description

The invention relates to an automotive radiator cap for a vertically oriented filler neck provided on a tank of an automotive radiator.

In EP-A-233 654 an automotive radiator is proposed, which radiator has a coolant pass between an inner tubular member and an outer tubular member of a vertically oriented filler neck. A connecting pipe is connected to the outer tubular member, so that the coolant pass is connected with a reserve tank through the connecting pipe. By this embodiment the coolant can be introduced smoothly into the connecting pipe, which coolant escapes from a pressure valve provided on the sealing portion of the inner tubular member.

Conventional type of automotive radiator described in Japanese patent laid-open publication 55-41391 and 58-1729419 has a coil spring for biasing a pressure valve in order to close the valve. The pressure valve of the conventional type of the automotive radiator cap, however, has the disadvantage that the pressure valve cannot sit on a seal portion smoothly.

The reason why the pressure valve of the conventional type radiator cap cannot sit on smoothly is explained hereinafter by referring to Fig. 5. Numeral 501 in Fig. 5 shows a top surface of a filler neck, numeral 503 shows a pressure valve and letter F₀ shows the closing force of the coil spring.

Since the coil spring is contacted with the pressure valve 503 at the portion which is higher than the top surface 501 of the filler neck, and since the closing force F₀ exerts pressure onto the top surface 505 of the pressure valve 503 vertically, the divided force F₁ the orientation of which is parallel with the top surface 505 of the pressure valve 503 occurres then the pressure valve 503 is inclined as shown in Fig. 5. The divided force F₁ is calculated according to the formula

$\text{F₁ = F₀ sin ϑ}$

wherein ϑ means opening angle of the pressure valve 503 and D shows the distance between the top surface 505 of the pressure valve 503 and a sealing portion 507 of the pressure valve 503. The divided force F₁ causes a rotating moment M₀ which is calculated as follows.

$\text{M₀ = F₁ D .}$

Therefore, the moment M₀ causes the pressure valve 503 to rotate clockwise as shown by arrow R in Fig. 5.

Therefore, the divided force F₁ opens the pressure valve 503 even though the coil spring biases the pressure valve 503 to the closing position. Accordingly, the divided force F₁ makes it hard for the pressure valve to sit on the filler neck 501 smoothly.

Another type of a conventional automotive radiator cap described in US-A- 3265048 has a coil spring biasing a pressure valve toward the filler neck in order to open the filler neck, when the pressure within a radiator tank increases up to a predetermined pressure. Since the pressure valve increases the boiling temperature point of the coolant within the radiator tank, the pressure valve does not open the filler neck, when the temperature of the coolant within the radiator tank increases up to the boiling temperature point under the normal atmospheric pressure. The pressure valve opens the filler neck when the temperature of the coolant increases higher than the boiling temperature point under normal atmospheric pressure and the pressure of the coolant increases higher than a predetermined value.

The pressure valve has a connecting hole at the central portion thereof and has a pressure-modulating valve provided within the connecting hole so that the pressure-modulating valve opens or closes the connecting hole.

The pressure-modulating valve normally opens the connecting hole by its weight, so that the pressure within the radiator tank can be maintained under the normal atmospheric pressure on condition that the pressure within the radiator tank is under the predetermined pressure, under which the coolant is boiling. When the coolant within the radiator tank starts steaming and the pressure of the steam increases up to the predetermined pressure, the pressure of the steam moves the pressure-modulating valve upwardly so that the pressure-modulating valve closes the connecting hole.

The pressure within the radiator tank normally increases gradually due to the operating period of the automotive engine. The pressure within the radiator tank, however, increases rapidly under the special circumstance that the automotive is racing.

Under such a special circumstance the conventional radiator cap has a serious disadvantage, namely, the pressure-modulating valve cannot open the connecting hole after the pressure-modulating valve has been closed by the rapidly increasing pressure. Since the pressure within the radiator tank is normally under air pressure, the pressure-modulating valve is forced to the closing position by the normal pressure within the radiator tank after the pressure-modulating valve is closed by the rapidly increasing pressure within the radiator tank.

Accordingly, the rapidly increasing pressure is maintained within the radiator tank by the pressure-modulating valve, and such a pressure causes some pressure damage at the tube.

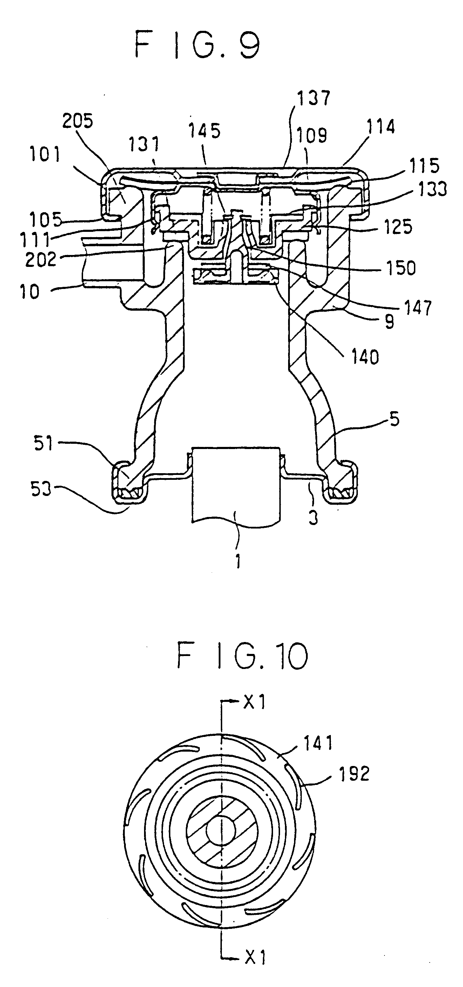

Another type of the conventional automotive radiator has a cap shown in Fig. 10. Such a conventional cap has a pressure valve body 804 which seals a filler neck and a pressure-modulating valve 861 which opens and shuts the connecting hole 805 provided in the pressure valve body 804. Since the pressure-modulating valve 806 is biased by a spring 808 in order to close the connecting hole 805, the pressure-modulating valve cannot operate frequently and the distance of movement of the pressure-modulating valve is slight, when the pressure-modulating valve opens the connecting hole.

Therefore, such a conventional pressure-modulating valve has the disadvantage that objects located between the pressure-modulating valve 806 and the connecting hole 805 are hard to remove after such objects are squeezed between the pressure-modulating valve 806 and the connecting hole 805.

The first object of the present invention is to provide the pressure valve in such a way that it can sit on the sealing portion smoothly.

The second object of the present invention is to solve the disadvantage that the pressure-modulating valve closes the connecting hole before the pressure within the radiator tank increases up to the predetermined pressure value. Namely, the second object of the present invention is to provide a pressure-modulating valve which can open the connecting hole at the predetermined pressure effectively.

The third object of the present invention is to solve the disadvantage that objects squeezed between the pressure-modulating valve and the connecting hole are hard to remove. Namely, the third object of the present invention is to provide a pressure-modulating valve from which any objects can be removed effectively.

These objects are achieved by the features in claim 1.

In order to attain the first object, the present invention employs the feature that the point of abutement at which the coil spring contacts the pressure valve is located lower than the connecting point between the pressure valve and the sealing portion.

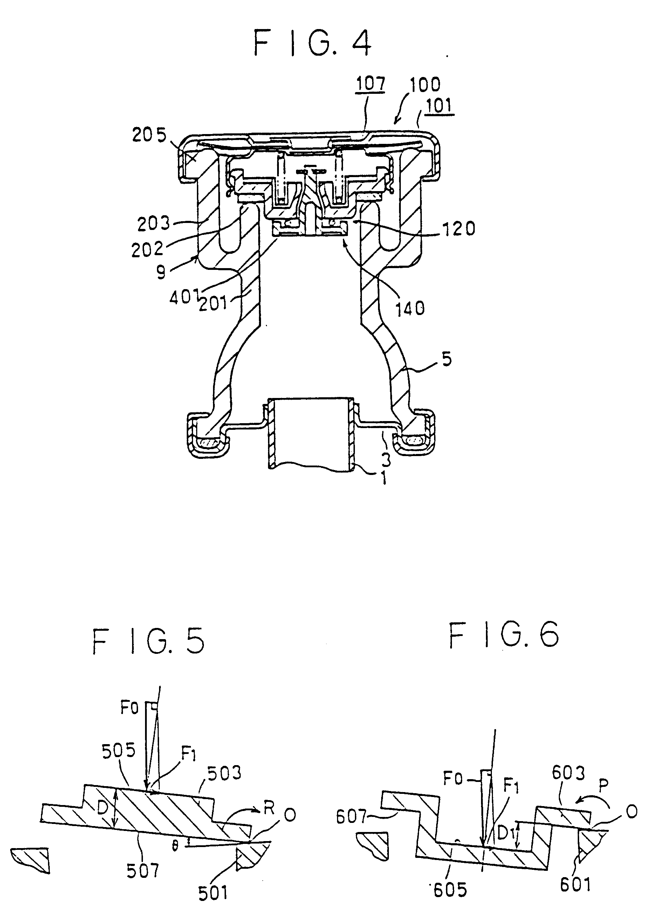

Since the contacting point between the coil spring and the pressure valve 603 is lower than the contacting point between the pressure valve 603 and the seal portion 607 as shown in Fig. 6 which shows the pressure valve and the end portion of the filler neck, the holding force F₀ is applied onto the pressure valve 603 at the point which is lower than the seal portion. Since the holding force F₀ has a divided force F₁ the orientation of which is parallel with the upper surface 605 of the pressure valve 603, the rotating moment M₁ which is calculated by the formula

$\text{M₁ = F₁ x D₁}$

is generated. Since the orientation of the rotating moment M₁ (which is shown by arrow P) the pressure valve 603 pushes into the closing position, the pressure valve 603 can sit on the seal portion smoothly. D₁ represents the distance between the upper surface 605 of the pressure valve 603 and the seal surface 607 of the pressure valve 607.

Accordingly, the pressure valve can sit on the sealing portion smoothly. The pressure valve can sit on the sealing portion of the filler neck at the same portion, namely, the sealing member provided on the pressure valve is in contact with the sealing portion of the filler neck at the same portion thereof. Since the sealing member has the tendency to produce a permanent deformation, such a permanent deformation makes the coolant within the radiator tank escape therethrough if the sealing member has changed its position. By the invention, however, such an escape is prevented by the permanent deformation of the sealing member, because the sealing member always sits on the sealing portion at the same position. The permanent deformation of the sealing member prevents any passage between the sealing member and the sealing portion of the filler neck.

In order to attain the second object of the present invention, a spring is provided which biases the pressure-modulating valve toward the closing position thereof. Accordingly, the pressure within the radiator tank can be released even though the pressure within the radiator tank increases rapidly and can be reduced to the predetermined pressure.

Since high pressure does not remain within the radiator tank, a pressure damage of the radiator tank and the tube is prevented. Accordingly the thickness of the radiator tank and the tube can be reduced.

A pressure-modulating valve is employed which is made of thermally deformable material deforming its shape due to the temperature within the radiator tank, so that the pressure-modulating valve can release the connecting hole when the temperature within the tank is lower than the predetermined temperature and can close the connecting hole when the temperature within the radiator tank is higher than the predetermined temperature. Therefore, the coolant within the radiator tank can escape to the atmosphere through the connecting hole when the temperature of the coolant is lower than the predetermined temperature. The pressure within the radiator tank increases after the temperature of the coolant has increased to the predetermined temperature at which the pressure-modulating valve closes the connecting hole.

Accordingly, since the pressure within the radiator tank can be released even though the pressure within the radiator tank increases rapidly, the pressure within the radiator tank can be maintained below the predetermined pressure value. Thus the thickness of the radiator tank and the tube can be reduced. Furthermore, since the pressure within the radiator tank is prevented from vibrating frequently, a pressure damage caused on the radiator tank and the tube can be reduced.

In order to attain the third object, a pressure-modulating valve is provided which is rotatably supported within the connecting hole and which has an impeller on a flange portion. The pressure-modulating valve can rotate within the connecting hole when the coolant within the radiator tank flows through the impeller. Namely, the flowing of the coolant makes the flange portion of the pressure-modulating valve rotate. Such a rotation of the pressure-modulating valve removes any objects squeezed between the pressure-modulating valve and the connecting hole.

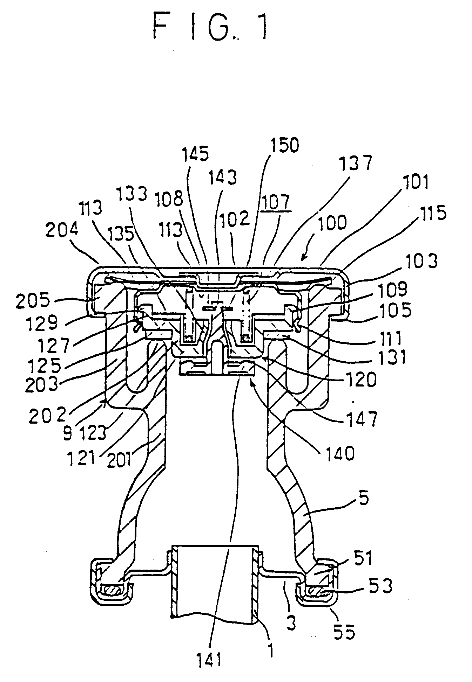

Fig. 1 is a sectional view taken along the line I-I in Fig. 2 showing a radiator cap according to the first embodiment,
Fig. 2 is a front view of an automotive radiator,
Fig. 3 is a sectional view showing a radiator cap according to the second embodiment,
Fig. 4 is a sectional view showing a modified radiator cap according to the second embodiment,
Fig. 5 is a sectional view showing a rotating moment caused in the conventional type of radiator cap,
Fig. 6 is a sectional view showing a rotating moment of the radiator cap of the present invention,
Fig. 7 is a sectional view showing a radiator cap according to the third embodiment,
Fig. 8 is a sectional view of a radiator cap according to the fourth embodiment,
Fig. 9 is a sectional view of a radiator cap according to the fifth embodiment,
Fig. 10 is a sectional view showing a pressure modulating valve according to Fig. 9,
Fig. 11 is a sectional view taken along the line X1-X1 in Fig. 10.
Fig. 12 is a sectional view showing a radiator cap of a conventional type.

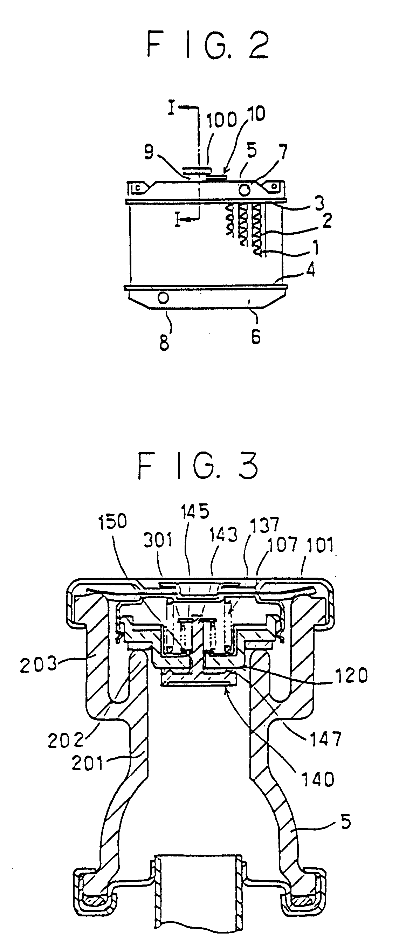

An automotive radiator includes a plurality of tubes 1, end plates 3 and 4 connected to both ends of the tubes 1, an upper tank 5 connected with the upper end plate 3 and a lower tank 6 connected with the lower end plate 4, as shown in Fig. 2. Corrugated fins 2 are welded between an adjacent pair of a plurality of tubes, so that the heat of the coolant passing through tubes 1 is conducted to the corrugated fins, in order to promote heat exchange.

An inlet pipe 5, through which a coolant from the automotive engine (not shown) is introduced into the upper tank 5, and a filler neck 9, through which a coolant is fed to the upper tank 5, are provided integrally on the upper tank 5. A connecting pipe 10 is provided on the filler neck 9, in order to connect the inside of the filler neck 9 to a reserve tank (not shown). A cap 100 is provided on the filler neck 9, in order to plug the filler neck 9.

An outlet pipe 8, through which the coolant in the lower tank 6 flows to the engine, is provided on the lower tank 6.

The filler neck 9 has an inner tubular member 201 and an outer tubular member, which is provided at the outside of the inner tubular member 201.

A inner sealing portion 202 is provided at the opening end of the inner tubular member, and an outer wall portion 204 is provided at the opening end of the outer tubular member 203. The outer sealing portion 204 is located higher than the inner sealing portion 202. A flange portion 205 is provided at the end portion of the outer tubular member in such a manner that the flange portion 205 elongates vertically outwardly.

The cap 100 has an outer cap member 101, the outer periphery of which elongates downwardly to make a side wall 103, and the lower end of the side wall 103 elongates vertically inwardly to make a hook portion 105. The cap 100 is connected with the filler neck 9, when the hook portion 105 is contacted with the flange portion 205.

Since the flange portion 205 has a notch portion (not shown), the cap 100 can be removed from the filler neck 9, when the hook portion 105 is located at the notch portion of the flange portion 205.

An inner cap member 107 is provided at the inner side of the outer cap member 101. The inner cap member has a wall portion 109 at its outer periphery and a convex portion 101, which is provided at the inner side of the side wall portion 109.

The outer cap member 101 has a port 102 at its center, and the inner cap member 107 also has a concave portion 108 at its center. The outer cap member 101 and the inner cap member 107 are connected to each other by a connecting plate 103 located at the concave portion 108 and the port 102.

The connecting plate 113 has a flange portion at its outer periphery, which flange portion surrounds the port 102 of the outer cap member; the connecting plate 113 also has a central flat portion welded with the concave portion 108 of the inner cap member 107, so that the connecting plate 113 is fixed with the inner cap member 107. Since the outer cap member 101 is held between the flange portion of the connecting plate 103 and the inner cap member 107, the outer cap member 101 can rotate against the inner cap member 107 and the connecting plate 113.

A leaf spring 114 is held between the outer cap member 101 and the inner cap member 107 in such a manner that the leaf spring 114 can rotate against the outer cap member 101 and the inner cap member 107. A ring-shaped sealing member 115 made of resin is provided on the inner surface of the leaf spring, so that the sealing member 115 sits on the outer sealing portion 204, when the cap 100 is connected with the filler neck 9.

A pressure valve 120 is provided on the inner side of the inner cap member 107 in such a manner that the cap-shaped pressure valve 120 faces the inner cap member 107.

The pressure valve 120 has a bottom plate 121, a side wall portion 123 elongating vertically upwardly from the outer periphery of the bottom plate 121, a flat portion 125 elongating horizontally outwardly from the end portion of the side wall portion 123, a flange portion 127 elongating vertically upwardly from the outer periphery of the flat portion 125, and a hook portion 129 elongating horizontally outwardly from the end portion of the flange portion 127.

The outer diameter of the bottom plate 121 with the side wall portion 123 is smaller than the inner diameter of the inner tubular member 201, and the bottom plate 121 with the side wall portion 123 is located within the inner tubular member 221.

The outer diameter of the flat portion 125 is larger than the outer diameter of the inner tubular member 221, and a ring-shaped sealing member 131 made of resin is fixed on the underside of the flat portion 121, so that the sealing member 131 sits on the inner sealing portion 202.

The outer diameter of the flange portion 127 is slightly smaller than the inner diameter of the convex portion 111 of the inner cap member 107c, and the outer diameter of the hook portion 129 is slightly smaller than the inner diameter of the side wall portion 109 of the inner cap member, so that the flange portion 127 and the hook portion 129 are located inside the side wall portion 102 of the inner cap member 107, and that the pressure valve 120 can move vertically along with the side wall portion 109 of the inner cap member 107. The pressure valve 120 is connected with the inner cap member in such manner that the hook portion 129 is hooked by the concave portion 111.

A connecting hole is provided at the center of the bottom plate 121, and a central wall 133 is provided on the end plate 121 of the inner cap member 103, so that the central wall 133 forms the connecting hole therein. The sectional area of the connecting hole is reduced at the upper side portion of the central wall 133.

A plurality of ribs 135 is formed on the flat plate 125, the side wall portion 123, the bottom plate 121 and the central wall 133, in order to increase the mechanical strength of the inner pressure valve 120.

A coil spring 137 is provided between the inner cap member 107 and the pressure valve 120, so that the pressure valve 120 is forced toward the inner tubular member 201. One end of the coil spring 137 is supported by the inner surface of the inner cap member and the other end of the coil spring is supported by the upper surface of the bottom plate 121.

A pressure-modulating valve 140 is provided on the underside of the bottom plate 120. The pressure-modulating valve 140 has a flat portion 141 and a central rod 143 elongating upwardly from the center of the flat portion 141. A sealing member 143 is provided on the upper surface of the flat portion, and the cross section of the central rod is reduced at the upper portion thereof, so that the gap between the central rod 143 and the center wall 133 maintains the same distance along the longitudinal axis of the central rod 143. A hook plate 145 is connected to the upper end portion of the central rod 143, so that the pressure-modulating valve 140 is prevented from dropping from the central wall 133.

The connecting hole 150 is provided between the outer surface of the central rod 143 and the inner surface of the central wall 133. The connecting hole 150 is shut when the sealing member 143 is sitting on the underside of the bottom plate 121 and the bottom plate 121 is lifted by the pressure within the upper tank 5.

The opening end 51 of the upper tank 5 is inserted into a groove provided at the outer periphery of the end plate 3 via an O-ring 53. The end plate 3 and the upper tank 5 are connected to each other by a plate 55, which is bent around the edge of the opening end. The lower tank 6 is also connected with the end plate 4 by such a plate 55.

The operation of the radiator cap described above is explained as follows. Since the space on the upper side of the pressure valve 120 is connected with the reserve tank through the pipe 10, the pressure within the space is maintained under atmospheric pressure.

The pressure-modulating valve 140 moves downwardly in order to remove the sealing member 147 from the bottom portion 121 of the pressure valve 120, when the pressure within the upper tank 5 is lower than the atmospheric pressure. Thus the coolant within the reserve tank is introduced to the upper tank through the pipe 10 and the connecting hole 110, which is provided between the central rod 143 of the pressure-modulating valve 140 and the central wall portion 133.

The pressure-modulating valve 140 moves upwardly in order to seal the bottom portion 121 of the pressure valve 120, when the pressure within the upper tank 5 is higher than the atmospheric pressure. Thus the connecting hole 150 is closed by the sealing member 147.

The pressure valve 120 moves upwardly, when the pressure in the upper tank 5 is higher than the predetermined pressure of the coil spring 137. The sealing member 131 moves with the pressure valve 120 upwardly, so that the inner sealing portion 202 of the inner tubular member 201 is opened and the evaporated coolant within the upper tank 5 escapes to the reserve tank through the groove formed between the outer tubular member 203 and the inner tubular member 201 and the pipe 10. Since the point of abutment between the coil spring 137 and the bottom plate 121 of the pressure valve 120 is located lower than the connecting point between the sealing member 131 and the inner sealing portion 202, a rotating moment is generated on the the pressure valve 120, in order to make the pressure valve 120 horizontal, when the pressure valve 120 inclines and partially opens the inner sealing portion 202. Accordingly, the pressure valve 120 of the this embodiment can maintain its position horizontally, so that the highly pressurized evaporated coolant within the upper tank 5 can escape to the groove formed between the inner tubular member 201 and the outer tubular member 203 along the whole circumferential periphery of the inner sealing portion 202. Accordingly, the pressure of the coolant, when the coolant escaped the groove, can be maintained below the predetermined pressure.

The second embodiment of the present invention is explained as follows. The second embodiment of the present invention has a small spring 301 provided between the hook plate 145 and the pressure valve 120, and the central rod 143 of the pressure modulating valve 140 does not vary its cross section along its longitudinal axis.

Since the small spring 301 forces the pressure to move the modulating valve 140 upwardly, the sealing member 147 is always forced toward the pressure valve 120 by the force of the small spring 301. Accordingly, the connecting hole 150 is opened, when the pressure within the upper tank decreases, so that the pressure forcing the pressure modulating valve 140 downwardly becomes higher than the force of the small spring 301.

All the other features of the second embodiment are the same as those of the first embodiment.

Though the sealing member 147 of the pressure-modulating valve 140 of the first and second embodiment is ring-shaped, sealing members having other shapes such as an O-ring can also be used for the sealing member as shown in Fig. 4.

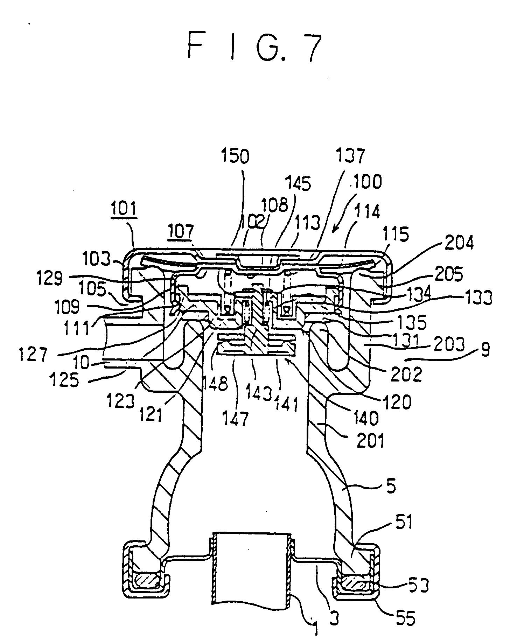

The third embodiment of the present invention is explained as follows by Fig. 7. The central rod 143 of the pressure-modulating valve 140 of the third embodiment has a larger diameter rod portion and a smaller diameter rod portion provided at the upper side of the larger diameter rod portion. The connecting hole 150 is provided between the outer surface of the smaller diameter rod portion of the central rod 143 and the inner surface of the central wall portion. A spring 148 is provided between the underside of a hook portion 134 of the central wall 133 and a shoulder portion of the central rod portion 143, in order to bias the pressure-modulating valve 140 downwardly for opening the connecting hole. Since the force of the spring 148 is small, the pressure-modulating valve 140 moves upwardly for closing the connecting hole, when the pressure within the upper tank 5 increases higher than about 0.4 - 0.6 kg/cm². Since a water pump (not shown), which circulates the coolant, rotates at high speed, when the engine is on accelerating or racing condition, the pressure within the upper tank 5 can increase up to about 0.4 - 0.6 kg/cm², when the engine is under such a condition. All the other features of the third embodiment are the same as those of the first and second embodiments described above.

The pressure-modulating valve 140 of the present invention can open the connecting hole 150 even though the water pump rotates at high speed on condition that the engine is accelerating or racing. Thus the pressure-modulating valve 140 of the third embodiment can release the coolant within the upper tank 5 to the reserve tank effectively through the connecting hole 150.

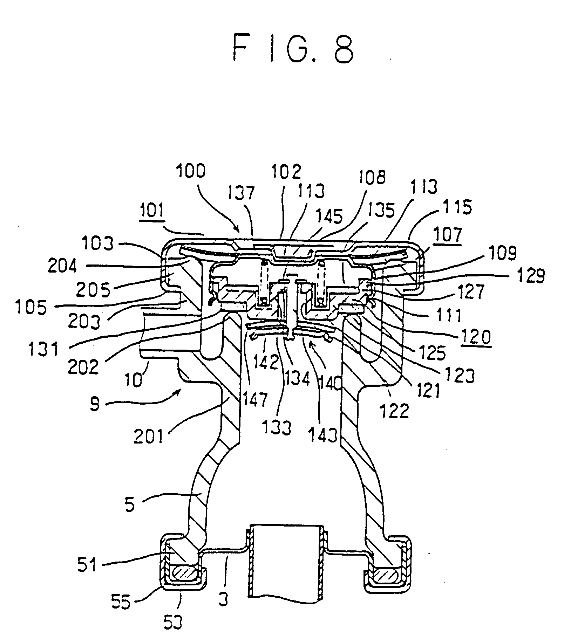

The fourth embodiment of the present invention is explained as follows by Fig. 8. The pressure-modulating valve 140 of the forth embodiment has the central rod 143 provided within the connecting hole 150, a disk portion 142 provided at the lower end of the central rod 143 and the sealing member 147 provided at the upper side of the disk portion 142, in order to close the pressure valve 120.

The disk portion 142 of the fourth embodiment is made of bi-metal, the projecting direction of which is changed at the predetermined temperature, and the disk portion 142 is connected with the central rod 143 at its center. The disk portion 142 projects upwardly as shown in Fig. 8, when the temperature within the upper tank 5 is lower than the predetermined temperature, so that the connecting hole 150 is opened.

The disk portion 142 projects downwardly, when the temperature within the upper tank 5 increases to the predetermined temperature, so that the disk portion 142 forces the sealing member 147 onto the pressure valve 120, in order to close the connecting hole 150. The predetermined pressure is set below the boiling point of the coolant within the upper tank 5, such as 80°C - 95°C.

A shape memory alloy can be used for the disk portion 142 instead of bi-metal.

Since the pressure-modulating valve of the fourth embodiment employs the disk portion 142, the coolant within the reserve tank can be introduced into the upper tank 5 through the pipe 10 and the connecting hole 150, when the temperature of the coolant within the upper tank 5 is lower than the predetermined temperature (80°C - 95°C). The connecting hole 150 is closed by the sealing member 147, when the disk portion 142 projects downwardly, namely when the temperature of the coolant within the upper tank 5 increases up to the predetermined temperature ( 80°C - 95°C). The coolant within the upper tank 5 can be escaped, when the pressure of the coolant increases higher than the force of the coil spring 137.

As described above, since the pressure-modulating valve of the fourth embodiment can open the connecting hole always on condition that the temperature of the coolant within the upper tank 5 is lower than the predetermined temperature, a variation of the pressure within the upper tank can be prevented so that a pressure damage on the upper tank 5 can be reduced.

Though the disk plate 142 shown in Fig. 8 forces the sealing member 147 against the bottom plate 123 of the pressure valve 120, when the disk plate 142 projects downwardly, the disk plate 142 of the fourth embodiment can have a small gap between the bottom surface 123 of the pressure valve 120 and the upper surface of the sealing member 147, even when the disk portion 142 projects downwardly, in order to open the connecting hole 150, when the temperature of the coolant within the upper tank 5 increases up to the predetermined pressure ( 70°C - 80°C). The connecting hole 150 of the modified embodiment of the fourth embodiment is closed, when the pressure within the upper tank 5 increases higher than the gravity of the pressure-modulating valve 140.

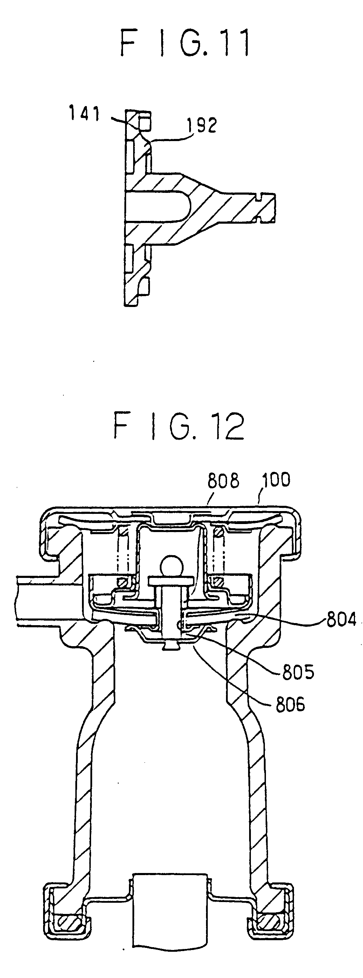

The fifth embodiment of the present invention is explained as follows by Fig. 9. The pressure-modulating valve 140 of the fifth embodiment has the central rod 143 and the flat portion 141 as shown in Figs. 10 and 11. A plurality of impellers 192 are provided on the upper side of the flat portion 142, so that the impellers 192 make the pressure-modulating valve 140 rotate, when the flow of the coolant passing through the connecting hole 150 collides thereto.

The pressure-modulating valve 140 moves downwardly by its gravity, as shown in Fig. 9, in order to maintain the pressure within the upper tank 5 under the atmospheric pressure, when the temperature of the coolant within the upper tank 5 is lower than the predetermined pressure.

The coolant within the upper tank 5 can escape to the reserve tank through the connecting hole 150 and the pipe 10, when the temperature of the coolant increases and the pressure also increases. The flow of the coolant passing through the connecting hole 150 makes the pressure-modulating valve 140 rotate. The connecting hole 150 is closed by the pressure-modulating valve 140, when the pressure attained on the underside of the flat portion 141 is greater than the gravity of the pressure-modulating valve, and the coolant within the upper tank 5 escapes to the reserve tank by lifting the pressure valve 120. The coolant in the reserve tank can return to the upper tank 5 through the connecting hole 150, when the temperature and the pressure of the coolant within the upper tank 5 are reduced. The flow of the coolant from the reserve tank to the upper tank 5 also rotates the pressure-modulating valve 140.

As a result, the pressure-modulating valve 140 of the fifth embodiment can be rotated by both flows of the coolant from the upper tank 5 to the reserve tank and from the reserve tank to the upper tank 5. The rotation of the pressure-modulating valve 140 makes it hard for an object to be held between the pressure-modulating valve 140 and the pressure valve 120, and also the rotation of the pressure-modulating valve 140 can remove any objects between the pressure-modulating valve 140 and the pressure valve 120.

## Claims

1. An automotive radiator cap (100) for a vertically oriented filler neck (9) provided on a tank of an automotive radiator,
comprising
an outer cap member (101) connectable to said filler neck;
an inner cap member (107) provided on the inner side of said outer cap member and connected rotatably with said outer cap member;
a pressure valve (120) connected with said inner cap member (107) for axial movement, said pressure valve having a seal portion (131) facing away from said inner cap member for sealing said filler neck;
a pressure modulating valve (140) functionally connected with said pressure valve (120) for closing and opening a connecting hole (150) which connects both sides of said pressure valve; and
a coil spring (137) between said inner cap member (107) and said pressure valve (120) biasing said pressure valve off said inner cap member,
wherein
the point of abutment between said coil spring (137) and said pressure valve (120) is located lower than the connecting point between said sealing portion (131) of said pressure valve (120) and said filler neck (9).

2. An automotive radiator cap as claimed in claim 1, wherein said sealing portion (131) of said pressure valve (120) is a sealing member adhered to the surface of the said pressure valve on the opposite side of said inner cap member (107)

3. An automotive radiator cap claimed in claim 1 further comprising;
a spring (148) for forcing said pressure modulating valve (140) to open said connecting hole (150)

4. An automotive radiator cap as claimed in claim 1, wherein said pressure modulating valve (140) has a central rod (143) provided inside of said connecting hole, (150) forming a gap therebetween and a flat portion (141; 142;) for opening and closing said connecting hole.

5. An automotive radiator cap as claimed in claim 4, wherein said flat portion (142) of said pressure modulating valve (140) is made of thermally deformable material which changes its shape due to the temperature of the coolant within said tank so that said flat portion opens said connecting hole (150) when the temperature of the coolant within said tank (5) is lower than a predetermined temperature and closes said connecting hole when the temperature of the coolant within said tank is higher than a predetermined temperature.

6. An automotive radiator cap according to claim 5, wherein said flat portion (142) of said pressure modulating valve (140) is made of bi-metal.

7. An automotive radiator cap according to claim 5, wherein;
said flat portion (142) of said pressure modulating valve is made of memory shaped alloy.

8. An automotive radiator cap according to claim 4, wherein said flat portion (141) of said pressure modulating valve has a plurality of impellers (192) so that the flow passing through said connecting hole (150) make said pressure modulating valve (140) rotating.

## Patentansprüche

1. Kraftfahrzeugkühlerdeckel (100) für einen vertikal ausgerichteten Füllstutzen (9), der an einem Wasserkasten eines Kraftfahrzeugkühlers vorgesehen ist, umfassend ein äußeres Deckelteil (101), das mit dem Füllstutzen verbindbar ist, ein inneres Deckelteil (107), das auf der inneren Seite des äußeren Deckelteils vorgesehen und verdrehbar mit dem äußeren Deckelteil verbunden ist, ein Druckventil (120), das mit dem inneren Deckelteil (107) für eine axiale Bewegung verbunden ist, wobei das Druckventil einen Dichtabschnitt (131) aufweist, der zum Abdichten des Füllstutzens von dem inneren Deckelteil wegweist, ein Druckmodulationsventil (140), das mit dem Druckventil (120) zum Schließen und Öffnen eines Verbindungsdurchgangs (150) in funktioneller Verbindung steht, der die beiden Seiten des Druckventils verbindet, und einechraubenfeder (137) zwischen dem inneren Deckelteil (107) und dem Druckventil (120), die das Druckventil von dem inneren Deckelteil weg beaufschlagt, wobei die Anlagestelle zwischen der Schraubenfeder (137) und dem Druckventil (120) tiefer liegt als die Verbindungsstelle zwischen dem Dichtabschnitt (131) des Druckventils (120) und dem Füllstutzen (9).

2. Kraftfahrzeugkühlerdeckel nach Anspruch 1,
wobei der Dichtabschnitt (131) des Druckventils (120) ein Dichtelement ist, das auf der dem inneren Deckelelement (107) gegenüberliegenden Seite haftend mit der Fläche des Druckventils verbunden ist.

3. Kraftfahrzeugkühlerdeckel nach Anspruch 1,
der weiterhin eine Feder (148) umfaßt, die das Druckmodulierventil (140) beaufschlagt, um den Verbindungsdurchgang (150) zu öffnen.

4. Kraftfahrzeugkühlerdeckel nach Anspruch 1,
wobei das Druckmodulierventil (140) einen mittigen Schaft (143) aufweist, der innerhalb des Verbindungsdurchgangs (150) vorgesehen ist, einen Spalt dazwischen bildet, sowie einen flachen Abschnitt (141; 142) zum Öffnen und Schließen des Verbindungsdurchgangs.

5. Kraftfahrzeugkühlerdeckel nach Anspruch 4,
wobei der flache Abschnitt (142) des Druckmodulierventils (140) aus einem thermisch deformierbaren Material besteht, das auf Grund der Temperatur des Kühlmittels im Wasserkasten seine Form ändert, so daß dieser flache Abschnitt den Verbindungsdurchgang (150) öffnet, wenn die Temperatur des Kühlmittels im Wasserkasten (5) niedriger ist als eine vorbestimmte Temperatur, und den Verbindungsdurchgang schließt, wenn die Temperatur des Kühlmittels im Wasserkasten höher ist als eine vorbestimmte Temperatur.

6. Kraftfahrzeugkühlerdeckel nach Anspruch 5,
wobei der flache Abschnitt (142) des Druckmodulierventils (140) aus einem Bimetall besteht.

7. Kraftfahrzeugkühlerdeckel nach Anspruch 5,
wobei der flache Abschnitt 142 des Druckmodulierventils aus einer Legierung mit Formgedächtnis besteht.

8. Kraftfahrzeugkühlerdeckel nach Anspruch 4,
wobei der flache Abschnitt (141) des Druckmodulierventils eine Anzahl von Schaufeln (192) aufweist, so daß der durch den Verbindungsdurchgang (150) fließende Strom das Druckmodulierventil (140) in Drehung versetzt.

## Revendications

1. Bouchon (100) de radiateur d'automobile pour un goulot de remplissage (9) orienté verticalement et monté sur le réservoir d'un radiateur d'automobile, comprenant :
- un élément extérieur de bouchon (101) pouvant être connecté audit goulot de remplissage;
- un élément intérieur de bouchon (107) prévu sur le côté intérieur dudit élément extérieur de bouchon et connecté de manière rotative audit élément extérieur de bouchon;
- une soupape de pression (120) connectée audit élément intérieur de bouchon (107) pour mouvement axial, ladite soupape de pression comportant une partie de fermeture étanche (131) dans une direction qui est orientée en sens opposé à la direction de l'élément intérieur de bouchon afin de fermer hermétiquement ledit goulot de remplissage;
- une soupape de modulation de la pression (140) connectée opérationnellement à ladite soupape de pression (120) pour fermer et ouvrir un trou de connexion (150) qui relie les deux côtés de ladite soupape de pression; et
- un ressort à boudin (137) entre ledit élément intérieur de bouchon (107) et ladite soupape de pression (120), sollicitant ladite soupape de pression pour l'éloigner dudit élément intérieur de bouchon, dans lequel :
- le point d'aboutement entre ledit ressort à boudin (137) et ladite soupape de pression (120) est situé plus bas que le point de connexion entre ladite partie de fermeture étanche (131) de ladite soupape de pression (120) et ledit goulot de remplissage (9).

2. Bouchon de radiateur d'automobile selon la revendication 1, dans lequel ladite partie de fermeture étanche (131) de ladite soupape de pression (120) est un élément de fermeture étanche qui adhère à la surface de ladite soupape de pression au côté opposé dudit élément intérieur de bouchon (107).

3. Bouchon de radiateur d'automobile selon la revendication 1, comprenant en outre :
- un ressort (148) pour obliger ladite soupape de modulation de la pression (140) à ouvrir ledit trou de connexion (150).

4. Bouchon de radiateur d'automobile selon la revendication 1, dans lequel ladite soupape de modulation de la pression (140) comporte une tige centrale (143) montée à l'intérieur dudit trou de connexion (150), formant un interstice entre eux, et une partie plate (141; 142) pour ouvrir et fermer ledit trou de connexion.

5. Bouchon de radiateur d'automobile selon la revendication 4, dans lequel ladite partie plate (142) de ladite soupape de modulation de la pression (140) est en matériau pouvant être déformé par la chaleur qui change sa forme sous l'effet de la température du réfrigérant présent dans ledit réservoir de sorte que ladite partie plate ouvre ledit trou de connexion (150) lorsque la température du réfrigérant situé à l'intérieur dudit réservoir (5) est inférieure à une température prédéterminée et ferme ledit trou de connexion lorsque la température du réfrigérant à l'intérieur dudit réservoir est supérieure à une température prédéterminée.

6. Bouchon de radiateur d'automobile selon la revendication 5, dans lequel ladite partie plate (142) de ladite soupape de modulation de la pression (140) est constituée d'un bilame.

7. Bouchon de radiateur d'automobile selon la revendication 5, dans lequel :
- ladite partie plate (142) de ladite soupape de modulation de la pression est constituée d'un alliage à mémoire de forme.

8. Bouchon de radiateur d'automobile selon la revendications 4, dans lequel ladite partie plate (141) de ladite soupape de modulation de la pression comporte une multitude de palettes (192) de sorte que l'écoulement traversant ledit trou de connexion (150) provoque la rotation de ladite soupape de modulation de la pression (140).
